# EUROPÄISCHE PATENTSCHRIFT

(11) **EP 1 538 115 B1**
(45) Veröffentlichungstag und Bekanntmachung des Hinweises auf die Patenterteilung: **14.05.2008**
(21) Anmeldenummer: 04027497.9
(22) Anmeldetag: 19.11.2004
(51) Int. Cl.: B65G 47/30, B65G 47/31, B65G 21/14, B65G 13/075

(54) **Verfahren zum Transportieren von Produkten**
Method for transporting products
Méthode pour le transport de produits

(30) Priorität: 01.12.2003 CH 20442003
(43) Veröffentlichungstag der Anmeldung: 08.06.2005
(73) Patentinhaber: ROBERT BOSCH GMBH, 70442 Stuttgart (DE)
(72) Erfinder: Schaumburg, Uwe, 8222 Beringen (CH)

(56) Entgegenhaltungen:
- DE-A1- 2 333 734
- DE-A1- 2 556 991
- DE-A1- 4 235 940
- FR-A1- 2 700 157
- GB-A- 1 414 427
- US-A- 3 255 865
- US-A- 4 088 224
- US-A- 4 264 005

## Beschreibung

### Technisches Gebiet

Die Erfindung betrifft ein Verfahren zum Transportieren von geschindelt staubaren Produkten gemäss Oberbegriff des Patentanspruchs 1 .

### Stand der Technik

Beim Transportieren von stückgutartigen Produkten, insbesondere in oder zu Verpackungsmaschinen, müssen die Produkte oft akkumuliert, d.h. gestaut oder gespeichert werden, bevor sie weitertransportiert bzw. einer Verpackungseinheit übergeben werden können. Empfindliche Produkte sind in diesen Stau- oder Speicherpositionen gefährdet, da sie durch einen zu grossen Staudruck beschädigt werden könnten.

Aus dem Stand der Technik sind deshalb die verschiedensten Vorrichtungen bekannt, welche eine möglichst staudruckarme bzw. staudrucklose Speicherung von Produkten ermöglichen sollen.

So offenbaren DE-A-43'11'519, US-5'085'311, US-A-6'062'376 und US-A-6'523'672 Vorrichtungen, welche einen Förderer aufweisen zum Transport der Produkte sowie zwei parallel dazu verlaufende Auflagebahnen in Form von Platten oder nicht angetriebenen Rollenbahnen. Der Förderer ist dabei gegenüber den Auflagebahnen höhenverstellbar, wobei er in einer angehobenen Position die Produkte über die Auflagebahnen hebt und diese somit mitnimmt und sich im abgesenkten Zustand unterhalb der Auflageflächen befindet, so dass die Produkte losgelöst vom Förderer auf den Auflageflächen aufliegen und gestaut werden. Diese Vorrichtungen lassen sich jedoch nur für flach auf dem Förderer aufliegende Produkte einsetzen, welche zudem genügend breit sind, um auch von den Auflageflächen getragen zu werden. Eine Stapelbildung der Produkte ist nicht möglich.

US-A-6'168'007 beschreibt eine ähnlich funktionierende Vorrichtung. Hier wird jedoch nicht der Förderer angehoben, sondern die in Förderrichtung stationären Auflageflächen sind höhenverstellbar. Auch diese Vorrichtung ist nur für flach aufliegende Produkte geeignet.

Des weiteren ist aus US-A-4'928'942 eine Vorrichtung bekannt, welche zwei horizontal verlaufende und in Förderrichtung nacheinander angeordnete Förderbänder aufweist. Dabei weisen die zwei Förderbänder einen überlappenden Bereich auf. Die zwei Förderbänder bilden Transportflächen, welche in derselben Ebene angeordnet sind. Eine über der Transportfläche angeordnete Führungsbahn lenkt Kartonzuschnitte aus einer flach liegenden Position in eine aufrecht stehende Position um. In dieser Lage werden sie vom ersten an den zweiten Förderer übergeben. Auch diese Vorrichtung lässt sich somit nur für eine bestimmte Produktart einsetzen.

GB-A-1'042'884 zeigt eine ähnliche Vorrichtung, welche ebenfalls zwei in Förderrichtung überlappende Förderer aufweist. Hier ist jedoch der zweite Förderer tiefer angeordnet als der erste. Wenn ein flach auf dem ersten Förderer aufliegendes Produkt am vorhergehenden Produkt gestaut wird, richtet es sich auf, verliert den Kontakt mit dem ersten Förderer und wird nun vom zweiten Förderer mitgenommen. Damit dies gelingt, muss das Produkt eine entsprechende Form aufweisen, also beispielsweise eine runde oder ovale Grundfläche aufweisen.

CH-A-667'258 beschreibt eine Vorrichtung zur Stapelbildung von in Schuppenformation zugeführten Druckereiprodukten. Die Vorrichtung weist zwei in Förderrichtung nacheinander angeordnete Förderer auf. Die relative Lage des Übergangsbereichs zwischen erstem und zweitem Förderer bezüglich der Förderstrecke und somit die Länge des zu bildenden Stapels ist mittels eines verschiebbaren Schlittens wählbar. Die Stapelbildung selber erfolgt dadurch, dass der zweite Förderer tiefer angeordnet ist als der erste und dass über den Förderern verschiebbare Führungsrollen vorhanden sind. Um einen durch nachfolgende Produkte erzeugten Druck auf den bereits gebildeten Stapel zu vermeiden, ist der Endbereich des zweiten Förderers gegen den Stapel ansteigend ausgebildet.

Allen oben beschriebenen Vorrichtungen ist zudem der Nachteil gemeinsam, dass die Förderstrecke im Bereich der Staubildung geradlinig verlaufen muss und Kurvenbahnen dadurch nicht realisierbar sind.

Eine aus FR-A-2 700 157 bekannte Vorrichtung zur Regelung des Flusses von auf Förderern transportierten Produkten dient der Aufreihung von Produkten in vordefinierten Abständen.

### Darstellung der Erfindung

Es ist deshalb Aufgabe der Erfindung, ein Verfahren der eingangs gennanten Art zu schaffen, welche ein möglichst druckarmes Stauen der Produkte erlauben und welche für unterschiedliche Arten von Produkten eingesetzt werden können.

Diese Aufgabe löst ein Verfahren mit den Merkmalen des Patentanspruchs 1.

Erfindungsgemäss werden die Produkte zuerst auf einer Förderstrecke und anschliessend auf einer Speicherstrecke gefördert, wobei die Speicherstrecke einen Anschlussbereich an die Förderstrecke aufweist, in welchem die Produkte über die Förderstrecke angehoben werden.

In bevorzugten Ausführungsbeispielen ist die Lage des Anschlussbereichs und somit der Stauendpunkt oder Stauauflaufpunkt entlang der Förderrichtung veränderbar und/oder die Geschwindigkeit auf der Speicherstrecke relativ zu derjenigen auf der Förderstrecke lässt sich variieren. Dadurch lässt sich der Staudruck steuern, so dass die Vorrichtung auch für empfindliche Produkte oder Stückgüter, wie beispielsweise Biskuits, geeignet ist.

In einer bevorzugten Ausführungsform verlaufen sowohl die Förder- wie auch die Speicherstrecke, mit Ausnahme des Anschlussbereichs, in einer horizontalen Ebene, wobei die Speicherstrecke über der Förderstrecke liegt.

Weitere vorteilhafte Varianten des Verfahrens und vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figuren 1a: eine schematische Darstellung der zur Durchführung des erfindungsgemässen Verfahrens geeigneten Vorrichtung gemäss einer ersten Ausführungsform in einer ersten Position;
- Figur 1b: die Vorrichtung gemäss Figur 1b in einer zweiten Position;
- Figur 2: einen Querschnitt durch eine schematische Darstellung einer Vorrichtung in einer zweiten Ausführungsform;
- Figur 3: einen Querschnitt durch eine schematische Darstellung einer Vorrichtung in einer dritten Ausführungsform;
- Figur 4a: einen Querschnitt durch eine schematische Darstellung einer Vorrichtung gemäss einer vierten Ausführungsform in einer ersten Position;
- Figur 4b: die Vorrichtung gemäss Figur 4a in einer zweiten Position;
- Figur 5a: eine Seitenansicht einer schematischen Darstellung einer Vorrichtung in einer fünften Ausführungsform;
- Figur 5b: eine Ansicht von vorne der Vorrichtung gemäss Figur 5a und
- Figuren 6a bis 6e: ein Prinzipschema des Erfindungsgegenstandes in mehreren Positionen.

### Wege zur Ausführung der Erfindung

Die nachfolgend beschriebenen Vorrichtungen zum Transportieren und Speichern von Produkten, insbesondere von druckempfindlichen Stückgütern, lassen sich in die verschiedensten Anlagen einbauen. Vorzugsweise bilden sie das Bindeglied zwischen einer Produktionseinheit und einer Verpackungs- oder einer Weiterverarbeitungseinheit. Ein bevorzugter Anwendungsbereich ist die Lebensmittelindustrie, insbesondere die Biskuitherstellung.

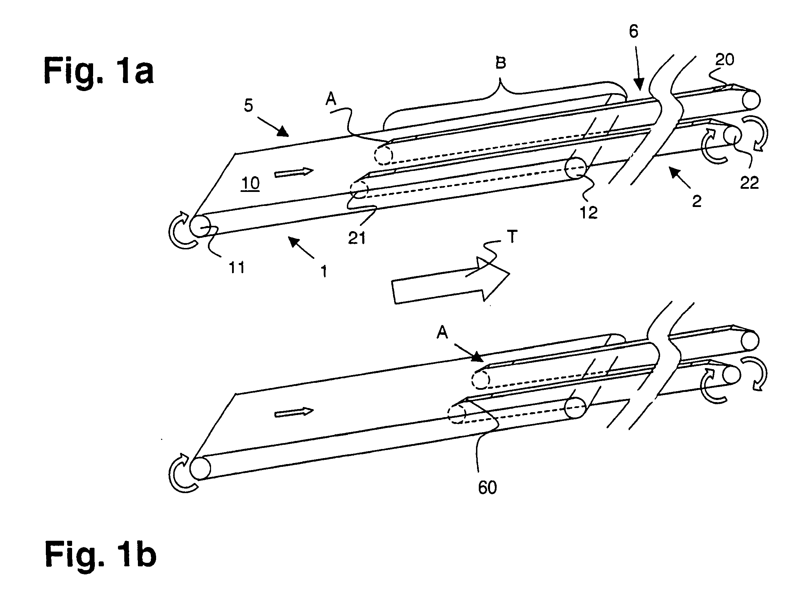

In den Figuren 1a und 1b ist eine erste Ausführungsform der Vorrichtung dargestellt. Sie weist einen ersten Förderer 1 und einen zweiten Förderer 2 auf. Der erste Förderer 1 dient zum Transport von stückgutartigen Produkten entlang einer Förderstrecke 5. Der zweite Förderer 2 schliesst in Förderrichtung T stromabwärts an den ersten Förderer 1 an und dient zum mindestens zeitweisen Stauen bzw. Speichern der Produkte entlang einer Speicherstrecke 6. Die Speicherstrecke 6 weist einen Anschlussbereich 60 auf, welcher an die erste Förderstrecke 5 anschliesst. Beide Förderer 1, 2 weisen mindestens annähernd horizontal verlaufende Förderebenen 10, 20 auf, wobei die zweite Förderebene 20 des zweiten Förderers 2 höher liegt als die erste Förderebene 10 des ersten Förderers 1. Damit die Produkte von der ersten Förderebene 10 auf die zweite Förderebene 20 gelangen können, steigt deshalb der Anschlussbereich 60 gegenüber der Förderstrecke 5 an.

Die zwei Förderer 1, 2 verlaufen mindestens in einem Teilbereich B parallel zueinander. Vorzugsweise überlappen sie in diesem Bereich B, wobei die Überlappung und somit die Position des Anschlussbereichs 60 entlang der Förderrichtung T veränderbar ist. Dies lässt sich mittels bekannter Mittel erzielen, beispielsweise mittels verschiebbarer Schlitten, auf welchen Umlenkrollen mindestens einer der Förderer 1, 2 gelagert sind.

Vorzugsweise ist die Fördergeschwindigkeit mindestens des zweiten Förderers 2 variierbar, insbesondere stufenlos regelbar. Der zweite Förderer 2 bzw. seine Steuerung kann so ausgebildet sein, dass die Förderrichtung des zweiten Förderers 2 auch umkehrbar ist, so dass sie zeitweise in gleicher Richtung und zeitweise in entgegengesetzter Richtung zur Förderrichtung des ersten Förderers 1 verläuft.

Im hier dargestellten Beispiel sind beide Förderer 1, 2 horizontale endlose Bandförderer mit einem oberen und einem unteren Trum. Jeder Förderer weist eine angetriebene Antriebsrolle 12, 22 und mindestens eine Umlenkrolle 11, 21 auf. Wie in den Figuren 1a und 1b ersichtlich ist, ist die Lage der zweiten Umlenkrollen 21 entlang der Förderrichtung T lageveränderbar. Der zweite Förderer 2 umfasst hier zwei parallel und synchron miteinander angetriebene Bänder, andere Ausführungsformen sind jedoch möglich. Auch das Ansteigen des Anschlussbereichs 60 sowie die höhere Lage des zweiten Förderers 2 lassen sich auf unterschiedliche Weise erzielen. Beispielsweise lässt sich der zweite Förderer 2 einfach auf einem höher gelagerten Gestell anordnen und seine mindestens eine hintere Umlenkrolle 21 auf der gewünschten Zwischenhöhe anordnen.

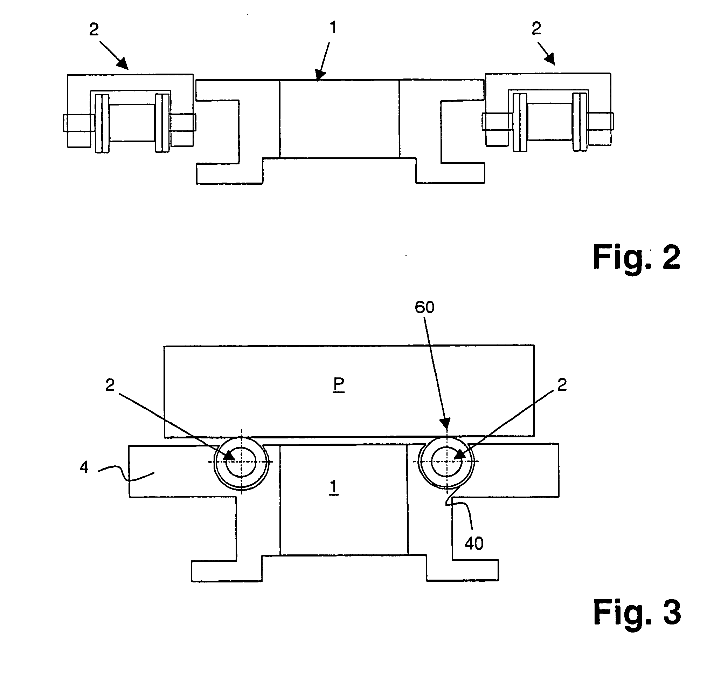

Es ist jedoch auch möglich, Hubmittel 3 oder Rampen bekannter Art einzusetzen. Ein entsprechendes Beispiel ist in Figur 2 dargestellt. Hier sind die Förderer 1, 2 Plattenkettenförderer, wobei der erste Förderer 1 in der Mitte angeordnet ist und zwei synchron angetriebene zweite Förderer 2 den ersten Förderer 1 je auf einer Seite flankieren. In diesem Fall werden die Produkte P entlang der Förderstrecke 5 von beiden oder mindestens vom ersten Förderer 1 transportiert. Die Anordnung kann selbstverständlich auch umgekehrt sein. Im gewünschten Staubereich wird der zweite Förderer 2 mittels der hier nicht dargestellten Hubmittel angehoben, wie dies in der Figur 2 dargestellt ist und übernehmen den Weitertransport der Produkte entlang der Speicherstrecke 6. Dabei ist auch hier die Lage des Anschlussbereiches 60 und somit die Lage der Anhebung des zweiten Förderers 2 vorzugsweise variierbar.

In Figur 3 ist eine weitere Variante dargestellt. Hier ist der erste Förderer 1 wiederum ein Endlos-Plattenkettenförderer. Der zweite Förderer 2 besteht wiederum aus zwei synchron angetriebenen Teilförderern, welche hier jedoch je durch einen umlaufenden Strang- oder Zugmittelförderer gebildet sind, der in Nuten 40 einer Haltevorrichtung 4 des ersten Förderers 1 eingelassen ist. Im Anschlussbereich 60 werden die Produkte vom niedrigeren Niveau der ersten Förderebene 10 auf das höhere Niveau der zweiten Förderebene 20 auf die umlaufenden Strang- oder Zugmittelförderer aufgeschoben.

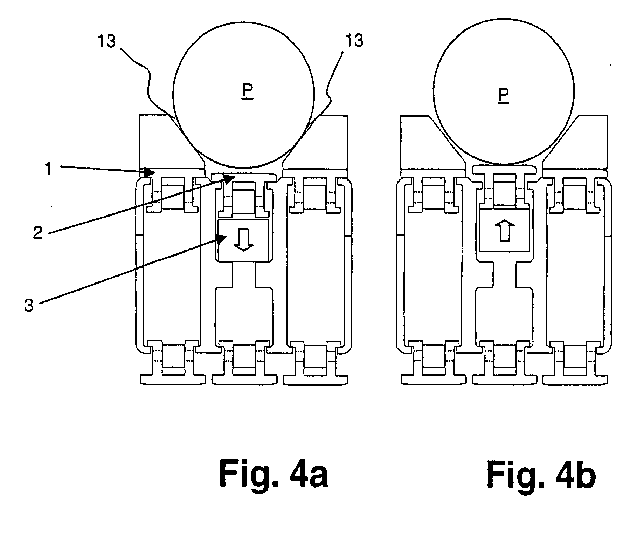

In den Figuren 4a und 4b ist ein viertes Ausführungsbeispiel dargestellt. Dieses Beispiel eignet sich insbesondere zum Transport von runden oder zylinderförmigen Produkten P. Der erste Förderer 1 weist seitliche Führungen 13 in Form von Schrägflächen auf, zwischen welchen das Produkt P gelagert ist. Der zweite Förderer 2, beispielsweise ein Plattenkettenförderer, befindet sich in der Mittelachse des ersten Förderers 1 und verfügt über Hubmittel 3. In Figur 4a ist die Position des zweiten Förderers 2 in abgesenkter Lage dargestellt, die Produkte P werden mittels des ersten Förderers 1 transportiert. In Figur 4b ist der zweite Förderer 2 angehoben, das Produkt P kontaktiert den ersten Förderer 1 nicht mehr, sondern wird nach Massgabe der Fördergeschwindigkeit des zweiten Förderers 2 transportiert bzw. gestaut.

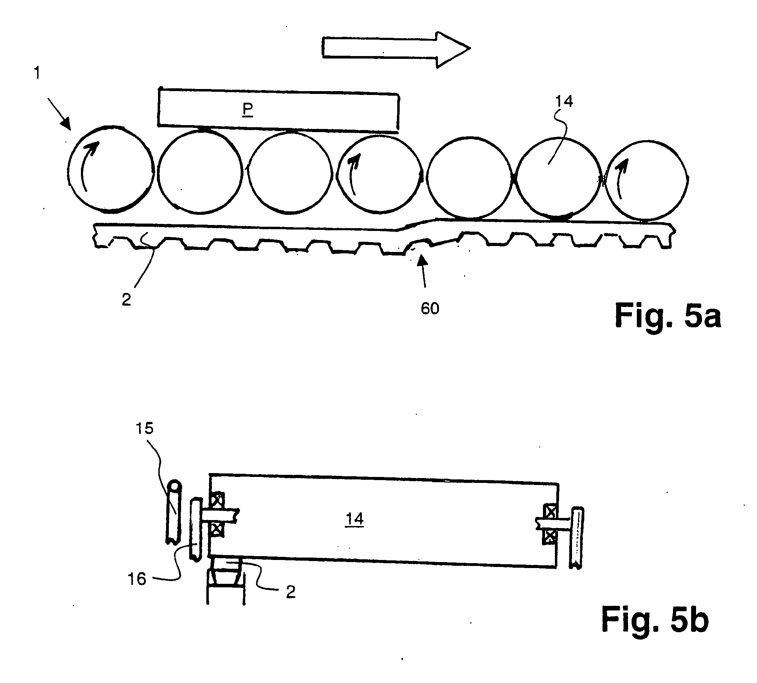

Die Figuren 5a und 5b zeigen ein fünftes Ausführungsbeispiel. Der erste Förderer 1 ist ein Rollenförderer mit einzeln angetriebenen Rollen 14. Jede Rolle 14 ist einzeln an einem Gestell 16 gelagert gehalten und mit einem Antrieb 15 verbunden. Der Antrieb 15 kann allen Rollen 14 gemeinsam sein. Mindestens in einem Teilbereich B verläuft der zweite Förderer 2 parallel und unterhalb des ersten Förderers 1. Der zweite Förderer 2 ist beispielsweise ein Bandförderer oder ein Plattenkettenförderer. Der zweite Förderer 2 ist mit Mitteln versehen, um ihn im Anschlussbereich 60 anzuheben. Dadurch werden die sich in diesem Bereich befindlichen Rollen 14 des ersten Förderers 1 in Reibungskontakt mit dem zweiten Förderer 2 gebracht. Da sie einzeln angetrieben sind, lassen sie sich durch Friktion mit der Fördergeschwindigkeit des zweiten Förderers 2 antreiben und weisen somit eine zum restlichen ersten Förderer 1 unterschiedliche Fördergeschwindigkeit auf. Es ist auch möglich, die Änderung der Fördergeschwindigkeit des ersten Förderers 1 mittels des zweiten Förderers 2 durch einen anderen Kraftoder Formschluss zu erzielen. Auch hier lässt sich wiederum die Lage der Anhebung des zweiten Förderes 2 und somit der Auflaufpunkt A vorzugsweise variieren.

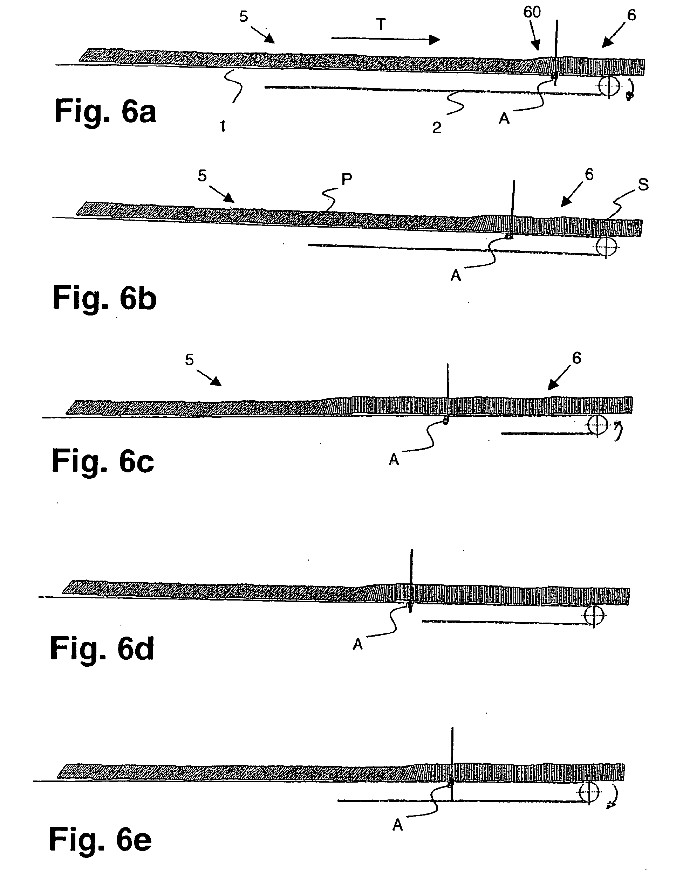

Anhand der Figuren 6a bis 6e lässt sich nun das erfindungsgemässe Verfahren erläutern. Der erste Förderer 1 ist schematisch mit einer Geraden dargestellt. Der zweite Förderer 2 ist nur teilweise dargestellt, wobei er die Form eines umlaufenden Bandförderers aufweist. Der mit T bezeichnete Pfeil stellt die Förderrichtung des ersten Förderers 1 dar. Die gebogenen Pfeile sollen jeweils die Förderrichtung des zweiten Förderers 2 zeigen. Mit A ist der Auflaufpunkt, das heisst das hintere Ende des Staubereichs oder der Speicherstrecke 6, bezeichnet.

Die Produkte P werden hier bereits geschindelt auf dem ersten Förderer 1 transportiert. Es ist jedoch auch möglich, dass sie beabstandet zueinander hintereinander gefördert werden. Ist nun eine stromabwärts angeordnete Weiterverarbeitungsmaschine noch nicht zur Aufnahme der Produkte P bereit, werden sie mittels des zweiten Förderers 2 gestaut. Dadurch laufen sie näher aufeinander auf. Die hinteren Produkte P könnten dabei einen unterwünschten Druck auf den bereits entstandenen vorderen Stapel S ausüben. Dies wird durch das erfindungsgemässe Verfahren verhindert indem die neu in die Staustrecke 6 gelangenden Produkte P im Übergangsbereich angehoben werden. Die Anhebung erleichtert die Anpassung an den bestehenden Stapel, insbesondere wenn die Produkte P im Stapel aufrecht stehen. Falls der Stapel wächst, kann der Druck auf ihn vermindert werden, indem der Auflagepunkt A nach hinten verschoben wird. Dies lässt sich dadurch erreichen, dass die Anhebung des zweiten Förderers 2 und somit der Anschlussbereich 60 in Förderrichtung stromaufwärts, also nach hinten verschoben wird. Der Druck lässt sich zudem vermindern, wenn die Förderrichtung des zweiten Förderers 2 umgekehrt wird. In den Figuren 6a bis 6e ist erkennbar, wie sich in diesen Situationen der Auflagepunkt A verschiebt, der Stapel S wächst und in welche Richtung er sich bewegt.

Dieselbe Wirkung wird mit der Ausführungsform gemäss den Figuren 5a und 5b erzielt. Auch hier lässt sich der Staudruck minimieren, nun durch die veränderte Fördergeschwindigkeit. Diese Wirkung lässt sich auch hier wiederum durch die Veränderung der Lage des Auflaufpunkts optimieren.

Die erfindungsgemässe Vorrichtung und das erfindungsgemässe Verfahren ermöglichen durch die Verwendung von zwei auf unterschiedlichen Ebenen angeordneten Förderern ein möglichst staudruckloses Transportieren und Speichern von empfindlichen Produkten jeglicher Form. Durch die Variierbarkeit der Fördergeschwindigkeit des zweiten Förderers lässt sich der Staudruck noch weiter vermindern.

### Bezugszeichenliste

- P: Produkt
- S: Stapel
- T: Förderrichtung
- B: Teilbereich
- A: Auflaufpunkt
- 1: erster Förderer
- 10: erste Förderebene
- 11: erste Antriebsrolle
- 12: erste Umlenkrolle
- 13: seitliche Führungen
- 14: Rolle
- 15: Antrieb
- 16: Gestell
- 2: zweiter Förderer
- 20: zweite Förderebene
- 21: zweite Antriebsrolle
- 22: zweite Umlenkrolle
- 3: Hubmittel
- 4: Halterung
- 40: Nut
- 5: Förderstrecke
- 6: Speicherstrecke
- 60: Anschlussbereich

## Patentansprüche

1. Verfahren zum Transportieren von geschindelt staubaren Produkten (P), welche nacheinander auf einer Förderstrecke (5) in einer Förderrichtung (T) transportiert und in einer in Förderrichtung (T) stromabwärts zur Förderstrecke (1) befindlichen Speicherstrecke (6) mindestens zeitweise als Stapel geschindelt gestaut werden, wobei die Produkte (P) auf der Speicherstrecke (6) transportiert werden, die Speicherstrecke (6) einen an die Förderstrecke (5) anschließenden Anschlussbereich (60) aufweist, **dadurch gekennzeichnet, dass** die Produkte (P) zur Anpassung an den Stapel mindestens in diesem Anschlussbereich (60) über die Förderstrecke (5) angehoben werden.

2. Verfahren nach Anspruch 1, wobei die Lage des Anschlussbereiches (60) entlang der Förderrichtung (T) veränderbar ist.

3. Verfahren nach einem der Ansprüche 1 oder 2, wobei die Produkte (P) entlang der Förderstrecke (5) mittels eines ersten Förderers (1) und entlang der Speicherstrecke (6) mittels eines zweiten Förderers (2) gefördert werden.

4. Verfahren nach einem der Ansprüche 1 bis 3, wobei die Produkte (P) auf der Förderstrecke (5) mit einer ersten Geschwindigkeit gefördert werden und wobei sie auf der Speicherstrecke (6) mit einer zweiten Geschwindigkeit gefördert werden, wobei die zweite Geschwindigkeit relativ zur ersten Geschwindigkeit variiert wird.

5. Verfahren nach einem der Ansprüche 1 bis 4, wobei die Produkte (P) mit Ausnahme des Anschlussbereichs (60) in mindestens annähernd horizontal verlaufenden Ebenen (10, 20) gefördert werden.

## Claims

1. Method of transporting products (P) which can be accumulated in shingled form, transported one after the other on a conveying section (5), in a conveying direction (T), and are accumulated in shingled form at least temporarily as a stack in a storage section (6) downstream of the conveying section (1), as seen in the conveying direction (T), the products (P) being transported on the storage section (6), and the storage section (6) having a connection region (60) adjoining the conveying section (5), **characterized in that** the products (P), for adaptation to the stack, are raised above the conveying section (5) at least in this connection region (60).

2. Method according to Claim 1, in which it is possible to change the position of the connection region (60) along the conveying direction (T).

3. Method according to either of Claims 1 and 2, in which the products (P) are conveyed along the conveying section (5) by means of a first conveyor (1) and along the storage section (6) by means of a second conveyor (2).

4. Method according to one of Claims 1 to 3, in which the products (P) are conveyed on the conveying section (5) at a first speed and on the storage section (6) at a second speed, the second speed being varied relative to the first speed.

5. Method according to one of Claims 1 to 4, in which, with the exception of the connection region (60), the products (P) are conveyed in at least more or less horizontally running planes (10, 20).

## Revendications

1. Procédé pour transporter des produits (P) accumulés en bardeaux puis transportés successivement sur un chemin de transfert (5) dans une direction de transfert (T) et qui sont accumulés empilés en bardeaux au moins de temps en temps dans un chemin de stockage (6) en aval du chemin de transfert (1) selon la direction de transfert (T),
les produits (P) étant transportés sur le chemin de stockage (6),
le chemin de stockage (6) ayant une région de raccordement (60) faisant suite au chemin de transfert (5),
**caractérisé en ce que**
les produits (P) sont soulevés au-dessus du chemin de transfert (5) pour s'adapter à la pile au moins dans la région de branchement (60).

2. Procédé selon la revendication 1,
selon lequel
la position de la région de raccordement (60) est variable le long de la direction de transfert (T).

3. Procédé selon l'une des revendications 1 ou 2,
selon lequel
les produits (P) sont transférés le long du chemin de transfert (5) à l'aide d'un premier transporteur (1) et le long du chemin de stockage (6) à l'aide d'un second transporteur (2).

4. Procédé selon l'une des revendications 1 à 3,
selon lequel
les produits (P) sont transférés sur le chemin de transfert (5) suivant une première vitesse et ils sont transférés sur le chemin de stockage (6) suivant une seconde vitesse,
la seconde vitesse étant modifiée par rapport à la première vitesse.

5. Procédé selon l'une des revendications 1 à 4,
selon lequel
les produits (P) sont transférés à l'exception de la zone de raccordement (60) dans des plans (10, 20) dirigés au moins sensiblement horizontalement.
